(19) **Europäisches Patentamt**
**European Patent Office**
**Office européen des brevets**

(11) **EP 1 070 571 A1**

(12) **EUROPEAN PATENT APPLICATION**
published in accordance with Art. 158(3) EPC

(43) Date of publication:
24.01.2001 Bulletin 2001/04

(51) Int. Cl.$^7$: **B25J 5/00**, B25J 9/12

(21) Application number: 00902913.3

(86) International application number:
**PCT/JP00/00754**

(22) Date of filing: 10.02.2000

(87) International publication number:
**WO 00/47372 (17.08.2000 Gazette 2000/33)**

(84) Designated Contracting States:
**DE FR GB**

(30) Priority: 10.02.1999 JP 3338599
08.09.1999 JP 25488099

(71) Applicant: **Sony Corporation**
**Tokyo 141-0001 (JP)**

(72) Inventors:
• **ISHIDA, Tatsuzu**
**Shinagawa-ku, Tokyo 141-0001 (JP)**

• **HATTORI, Yuichi**
**Shinagawa-ku, Tokyo 141-0001 (JP)**
• **KUROKI, Yoshihiro**
**Shinagawa-ku, Tokyo 141-0001 (JP)**

(74) Representative:
**Melzer, Wolfgang, Dipl.-Ing.**
**Patentanwälte**
**Mitscherlich & Partner,**
**Sonnenstrasse 33**
**80331 München (DE)**

(54) **DEVICE AND METHOD FOR CONTROLLING JOINT MECHANISM, JOINT DEVICE, ROBOT DEVICE, AND METHOD FOR CONTROLLING ROBOT DEVICE**

(57)    A joint mechanism control device and method, and a robot device and its control method include: electric current detection means for detecting an electric current value of the drive current applied to an actuator for driving a joint mechanism; and external force torque detection means for detecting the level of the torque by an external force applied to the output axis of the actuator based on the electric current value detected by the electric current detection means. In addition, a joint device and the robot device include: motor unit for generating the rotation torque for the actuator; and motor control means, provided in the motor unit, for controlling the drive of the motor unit.

FIG. 2

**Description**

Technical Field

The present invention relates to the joint mechanism control apparatus and method, the joint apparatus, the robot device and the method for controlling the robot device, and can be appropriately applied to, for example, a two-leg walking robot.

Background Art

Conventionally, a two-leg walking robot is designed by connecting a pair of leg units to a belly unit through a thigh joint mechanism. Each leg unit is formed by connecting a thigh unit to a lower leg unit through a knee joint mechanism, and by connecting a foot unit to the lower leg unit through an ankle joint mechanism.

This two-leg walking robot has an actuator (normally an AC (Alternating Current) serve-motor hereinafter referred to as a motor) incorporated for a necessary free level for each joint mechanism. Each motor of each joint mechanism can be individually driven and controlled such that each leg unit can be driven in a predetermined pattern, thereby performing a walking operation as a complete robot.

In the above described two-leg walking robot, various sensors such as a pressure sensor, a tilt angle sensor, an acceleration sensor, a micro switch, etc. are provided at an ankle joint mechanism or a foot unit. The two-leg walking robot is designed to stably walk even on the unleveled ground with tilt or convexity/concavity by controlling the direction of the foot units such that the reverse surfaces of the foot units can always follow the surface of the walkway based on the outputs from the above described sensors in the walking operation.

However, when such a sensor is actually provided for the ankle joint mechanism and the leg unit, the total weight of an entire robot increases by the weight of the sensor. In addition, wiring is required to electrically connect the sensors with a control system in the robot, thereby causing the problem of a complicated configuration of the entire robot. Furthermore, if a sensor is mounted, it is necessary to process sensor information using software in a control system in the robot, thereby complicating the walking control.

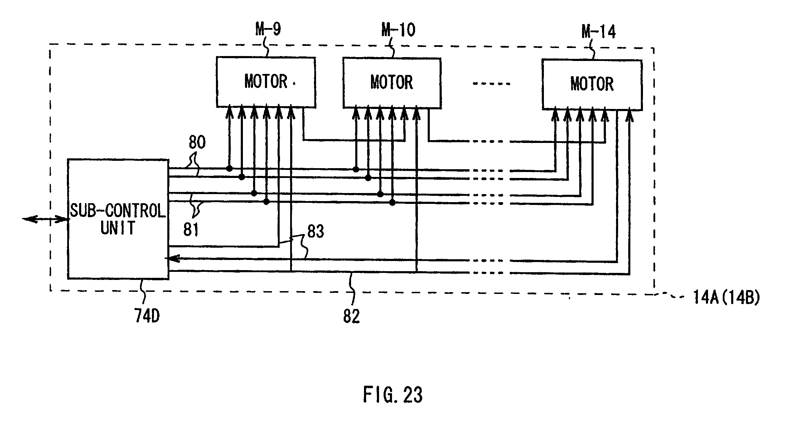

With the conventional 2-leg walking robot, for example, as shown in Fig. 23, a main control unit 1 for controlling the operations of the entire robot is connected to each motor 3 (3-1 through 3-n) through a multi-axis controller 2, and the multi-axis controller 2 controls each motor 3 in each specific state at a control instruction output from the main control unit 1.

In the above described two-leg walking robot, three rotation drive cables (U phase, V phase, and W phase), four rotation position sensor cables (A phase, B phase, and Z phase), and one ABS position serial signal cable, that is, a total of seven cables 4, are required, thereby causing the problem of a complicate configuration containing a larger number of wires for the entire robot.

Disclosure of the Invention

The present invention has been developed to solve the above described problems, and aims at providing an apparatus and a method for controlling the joint mechanism capable of simplifying the configuration, a joint apparatus and a robot device and a control method thereof.

To solve the above described problem, the joint mechanism control device according to the present invention includes: electric current detection means for detecting an electric current value of the drive current of an actuator for driving a joint mechanism; and external force torque detection means for detecting the level of the torque by an external force applied to the output axis of the actuator based on the electric current value detected by the electric current detection unit.

As a result, according to the control device, the external force applied to the first or the second link can be obtained without any sensor, etc. Thus, a sensor, etc. for directly measuring the external force can be omitted, thereby realizing a joint mechanism control device with a simple entire configuration.

In addition, the method of controlling the joint mechanism according to the present invention includes: a first step of detecting an electric current value of the drive current of the actuator for driving a joint mechanism; and a second step of detecting the level of the torque by an external force applied to the output axis of the actuator based on the detected electric current value.

As a result, in the control method, the external force applied to the first or the second link can be obtained without a sensor, etc. Thus, a sensor, etc. for directly measuring the external force can be omitted, thereby realizing a joint mechanism control device with a simple entire configuration of the joint mechanism.

Furthermore, the robot device according to the present invention includes: electric current detection means for detecting an electric current value of the drive current of an actuator of a joint mechanism; and external force torque detection means for detecting the level of the torque by an external force applied to the output axis of the actuator based on the electric current value detected by the electric current detection unit.

As a result, according to the robot device, the external force applied to the first or the second component can be obtained without a sensor, etc. Thus, a sensor, etc. for directly measuring the external force can be omitted, thereby realizing a robot device with a simple entire configuration.

Furthermore, the robot device control method according to the present invention includes: a first step of detecting an electric current value of the drive current of the actuator; and a second step of detecting the level of the torque by an external force applied to the output axis of the actuator based on the detected electric current value.

As a result, in the robot device control method, the external force applied to the first or the second component can be obtained without any sensor, etc. As a result, a sensor, etc. for directly measuring the external force can be omitted, thereby realizing a robot device control method with a simple entire configuration of the robot device.

Furthermore, according to the present invention, the two-leg walking robot device includes: an actuator, provided at the ankle joint mechanism, for generating the rotation torque at a level depending on a drive current; an electric current detection unit for detecting the electric current value of the drive current of the actuator; an external force torque detection unit for detecting the level of the torque generated by an external force by the output axis of the actuator based on the electric current value detected by the electric current detection unit; and a control unit for controlling the actuator based on the detection result of the external force torque detection unit such that the torque generated by the external force provided for the output axis of the actuator can be removed.

As a result, the robot device realizes walking without a sensor, etc. with good balance on the unleveled ground, thereby realizing a robot device with a simple entire configuration.

In addition, according to the present invention, the method of controlling a two-leg walking robot device includes: a first step of detecting the electric current value of the drive current of an actuator, provided at the ankle joint mechanism, for generating the rotation torque at a level depending on a drive current; a second step of detecting the level of the torque generated by an external force by the output axis of the actuator based on the detected electric current value; and a third step of controlling the actuator based on the detection result obtained in the second step such that the torque generated by the external force provided for the output axis of the actuator can be reduced.

As a result, the method realizes a robot device walking without a sensor, etc. with good balance on the unleveled ground, thereby realizing a method of controlling a robot device with a simple entire configuration.

Furthermore, according to the present invention, the joint device includes a motor unit for generating the rotation torque for the actuator; and motor control means, provided in the motor unit, for controlling the drive of the motor unit.

As a result, the joint device can largely reduce the number of wires between the actuator and the external devices, thereby realizing a simple configuration of the joint device.

Furthermore, according to the present invention, the robot device includes a motor unit for generating the rotation torque for the actuator which drives a joint mechanism; and motor control means, provided in the motor unit, for controlling the drive of the motor unit.

As a result, the robot device can considerably reduce the number of wires connected to each actuator of a joint mechanism, thereby realizing a robot device with a simple configuration.

Brief Description of the Drawings

Fig. 1 is an oblique view of the configuration of the two-leg robot according to the embodiment of the present invention.
Fig. 2 is an oblique view of the configuration of the two-leg robot according to the embodiment of the present invention.
Fig. 3 shows the concept about the configuration of the two-leg robot according to the embodiment of the present invention.
Fig. 4 is a front view and a side view showing the configuration of the thigh joint mechanism.
Fig. 5 is a front view and an oblique view showing the configuration of the thigh joint mechanism.
Fig. 6 is a side view, a front view, and a side view showing the configuration of the ankle joint mechanism.
Fig. 7 is a block diagram showing the internal configuration of the two-leg walking robot shown in Fig. 1.
Fig. 8 is a block diagram showing the electrical connection between the sub-control unit and each motor.
Fig. 9 is a sectional view showing the configuration of each motor.
Fig. 10 shows the outline of the configuration of the rotor and the rotor axis magnetic pole angle sensor.

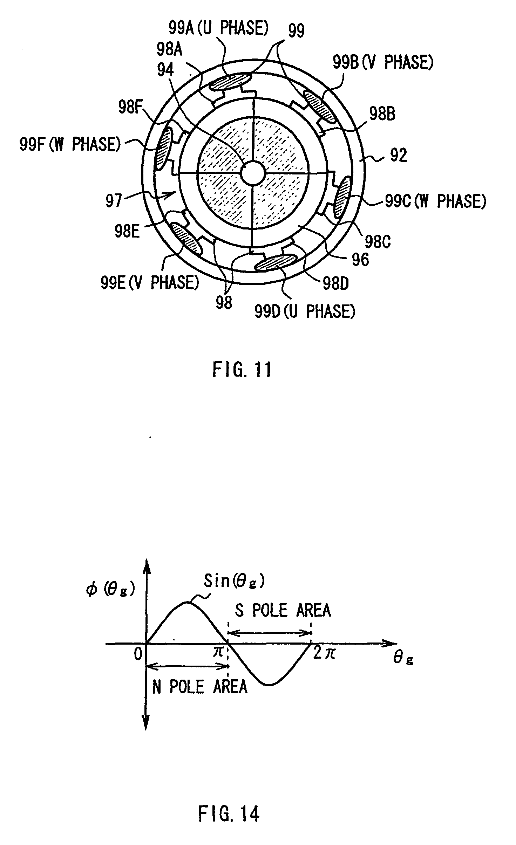

Fig. 11 is a partial sectional view showing the positional relationship between a rotor and a stator iron core.
Fig. 12 shows the outline of the configuration of a stator and a power substrate.

Fig. 13 shows the outline of the configuration of a torque amplification unit.

Fig. 14 shows the waveform for explanation of the magnetization pattern of a resin magnet of one-turn absolute angle sensor.

Fig. 15 shows the waveform for explanation of the first and the second one-turn absolute angle sensor signals.

Fig. 16 is a plan view showing the outline of the configuration of the control substrate.

Fig. 17 is a block diagram of the configuration of the control substrate.

Fig. 18 is a block diagram of the configuration of the power substrate.

Fig. 19 is a block diagram of the configuration of a one-chip microcomputer.

Fig. 20 is a block diagram showing the operations process of the CPU in the motor rotation control process mode.

Fig. 21 is a block diagram of the procedure of the rotor axis magnetic pole rotation number detecting process.

Fig. 22 is a flowchart showing the unleveled ground walking control procedure.

Fig. 23 is a block diagram showing the connection relationship between each motor and the main control unit of the conventional robot.

Best Mode for Carrying Out the Invention

An embodiment of the present invention will be described below by referring to the attached drawings.

(1) Entire Configuration of the Robot according to the Embodiments

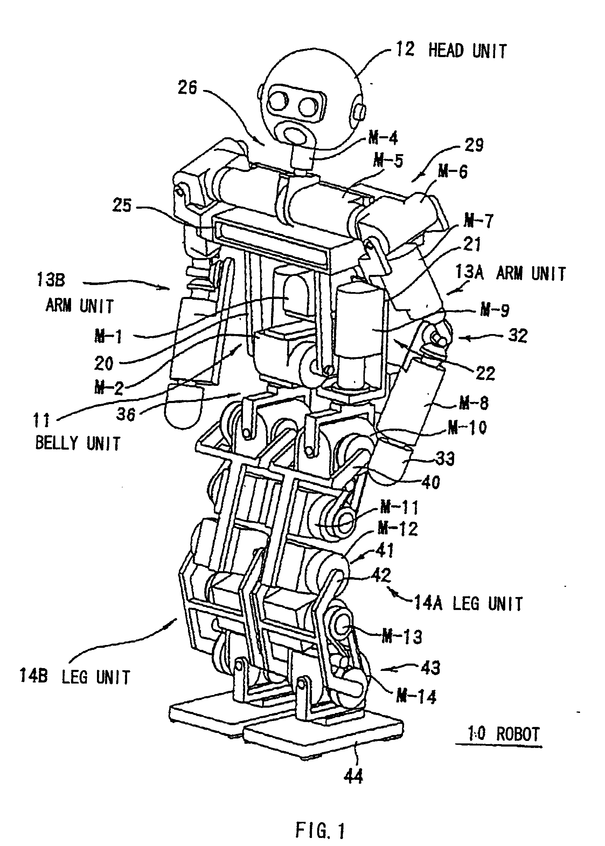

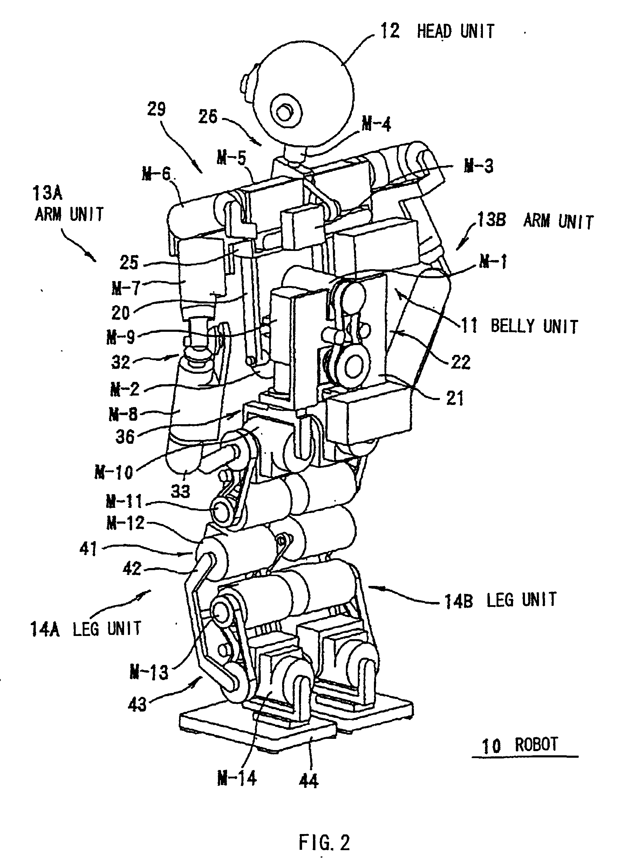

In Figs. 1 and 2, a robot 10 indicates a two-leg walking robot according to the embodiments. A head unit 12 is positioned above a belly unit 11. Arm units 13A and 13B are positioned as having the same configurations at each side of the belly unit 11. Leg units 14A and 14B are positioned as having the same configurations at each lower side of the belly unit 11.

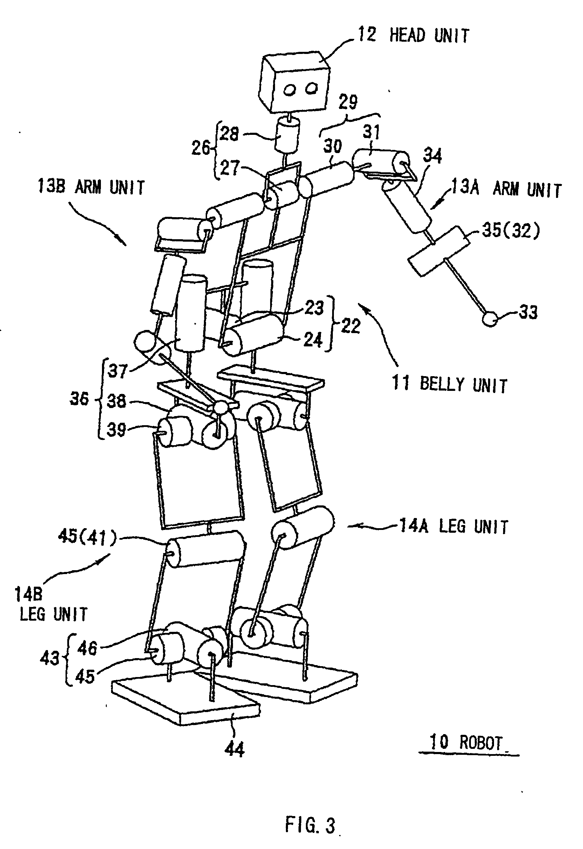

The belly unit 11 is designed by connecting a frame 20 forming the upper portion of a trunk to a hip base 21 forming the lower portion of the trunk through a knee joint mechanism 22. The upper portion of the trunk of the belly unit 11 can independent rotate, by driving motors M-1 and M-2 of the knee joint mechanism 22 fixed to the hip base 21 at the lower portion of the belly unit, on a roll axis 23 and a pitch axis 24 which are orthogonal to each other as shown in Fig. 3

The head unit 12 is mounted on the center of a shoulder base 25 fixed on the top of the frame 20 through a neck joint mechanism 26, and can independently rotate, by driving each of the motors M-3 and M-4 of the neck joint mechanism 26, on a pitch axis 27 and a yaw axis 28 which are orthogonal to each other as shown in Fig. 3.

Each of the arm units 13A and 13B is mounted on the left or the right of the shoulder base 25 through a shoulder joint mechanism 29, and can independently rotate, by driving each of the motors M-5 and M-6 of the shoulder joint mechanism 29, on a pitch axis 30 and a roll axis 31 which are orthogonal to each other as shown in Fig. 3.

In this case, in each of the arm units 13A and 13B, a motor M-8 forming each fore arm unit is connected to the output axis of a motor M-7 through an elbow joint mechanism 32, and a hand unit 33 is attached to the tip of the forearm.

In each of the arm units 13A and 13B, the forearm unit rotates on a yaw axis 34 shown in Fig. 3 by driving the motor M-7, and the forearm unit rotates on a pitch axis 35 shown in Fig. 3 by driving the motor M-8.

On the other hand, each of the leg units 14A and 14B is mounted to the hip base 21 below the belly unit through a thigh joint mechanism 36, and can independently rotate on a yaw axis 37, a roll axis 38 and a pitch axis 39 orthogonal to each other as shown in Fig. 3 by driving each of the motors M-9 through M-11 of the corresponding thigh joint mechanism 36.

In this case, in each of the leg units 14A and 14B, a frame 42 forming a lower leg unit is connected to the lower end of a frame 40 forming a thigh unit through a knee joint mechanism 41, and a foot unit 44 is connected to the lower end of the frame 42 through an ankle joint mechanism 43.

Thus, in each of the leg units 14A and 14B, the lower leg unit can rotate on a pitch axis 45 shown in Fig. 3 by driving a motor M-12 forming part of the knee joint mechanism 41, and the foot unit 44 can independently rotate on the pitch axis 45 and a roll axis 46 orthogonal to each other as shown in Fig. 3 by driving motors M-13 and M-14 of the ankle joint mechanism 43 respectively.

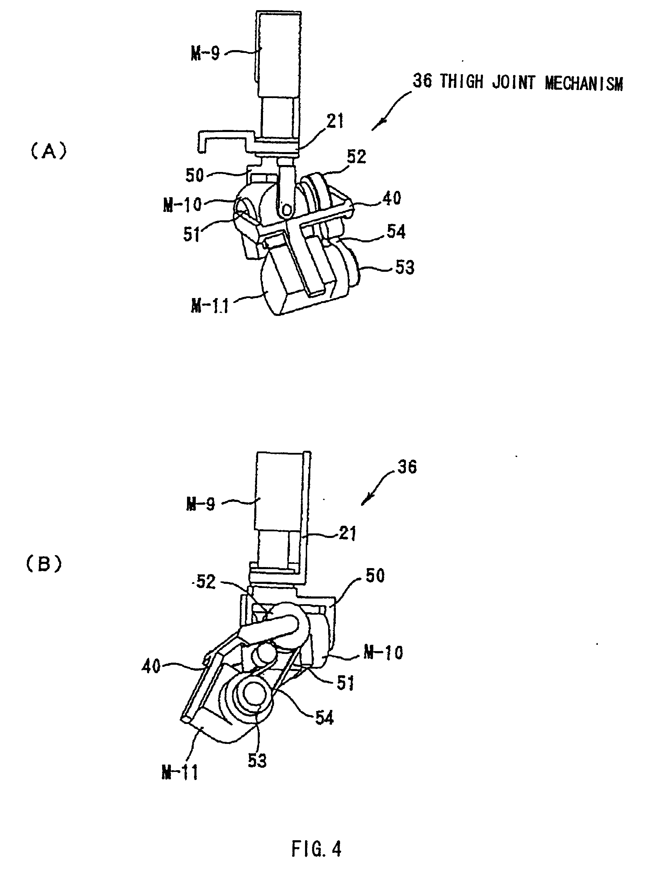

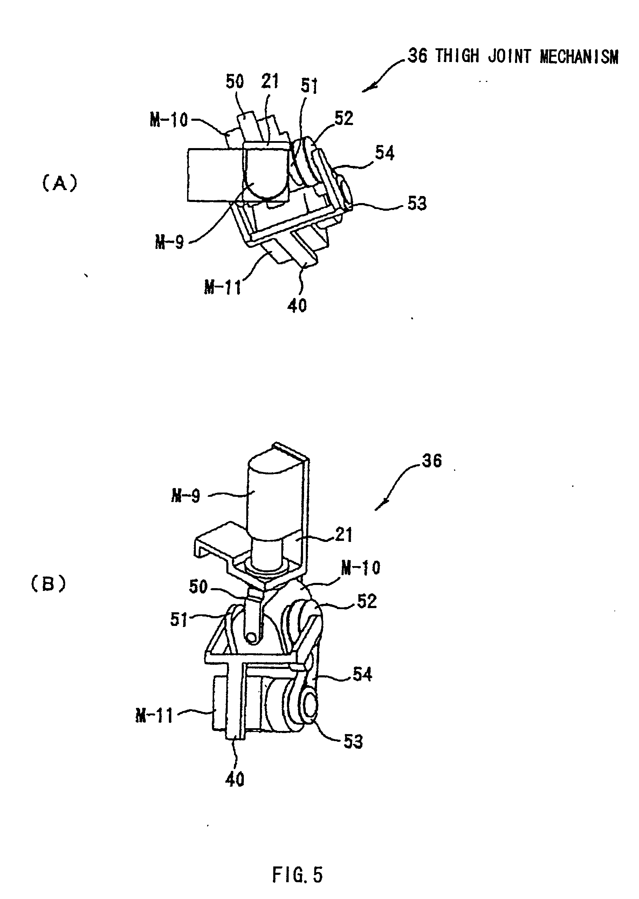

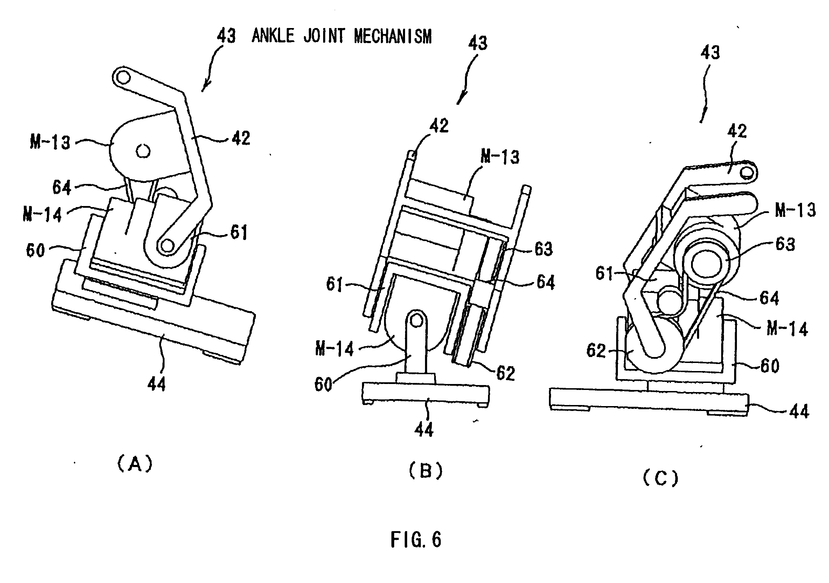

Figs. 4 and 5 show the configuration of the thigh joint mechanism 36 of the robot 10, and Fig. 6 shows the configuration of the ankle joint mechanism 43.

As shown in Figs. 4 and 5, the motor M-9 is fixed to the hip base 21 at the lower portion of the belly unit in the thigh joint mechanism 36. The output axis of the motor M-10 is connected to the output axis of the motor M-9 through a U-shaped connection material 50, and a U-shaped material 51 is fixed to the side of the motor M-10.

In addition, a joint mechanism pulley 52 is connected to the U-shaped material 51 as freely rotating thereon, and the frame 40 forming part of the thigh unit in the leg units 14A and 14B is provided with one upper end of the U-shaped material 51 fixed to the joint mechanism pulley 52, and the other end attached to the U-shaped material 51 as freely rotating thereon.

The motor M-11 of the thigh joint mechanism 36 is fixed to the frame 40, and a pulley 53 attached to the output axis of the motor M-11 is connected to the joint mechanism pulley 52 through a timing belt 54.

Thus, in the thigh joint mechanism 36, the corresponding leg units 14A and 14B can independently rotate on the yaw axis 37, the roll axis 38, and the pitch axis 39 by driving each of the motors M-9 through M-11.

In this embodiment, the yaw axis 37 passing through the center of the output axis of the motor M-9 of the thigh joint mechanism 36, the roll axis 38 passing through the center of the output axis of the motor M-10, and the pitch axis 39 passing through the rotation center of the frame 40 are positioned such that they can cross at one point in the space.

In the ankle joint mechanism 43, as shown in Fig. 6, the output axis of the motor M-14 is fixed to a U-shaped connection material 60 fixed to the foot unit 44. A joint mechanism pulley 62 is fixed to the side of the motor M-14 through a U-shaped material 61.

The frame 42 forming part of the lower leg unit of the above described leg units 14A and 14B is mounted with one lower end connected to the center of the joint mechanism pulley 62 as freely rotating, and with the other lower end connected to the side of the U-shaped connection material 61 as freely rotating.

In addition, the motor M-13 is fixed to the frame 42, a pulley 63 is fixed to the output axis of the motor M-13, and the pulley 63 and the joint mechanism pulley 62 are connected with each other through a timing belt 64.

Thus, in the ankle joint mechanism 43, the foot unit 44 can independently rotate on the roll axis 45 and the pitch axis 46 by driving each of the motors M-13 and M-14.

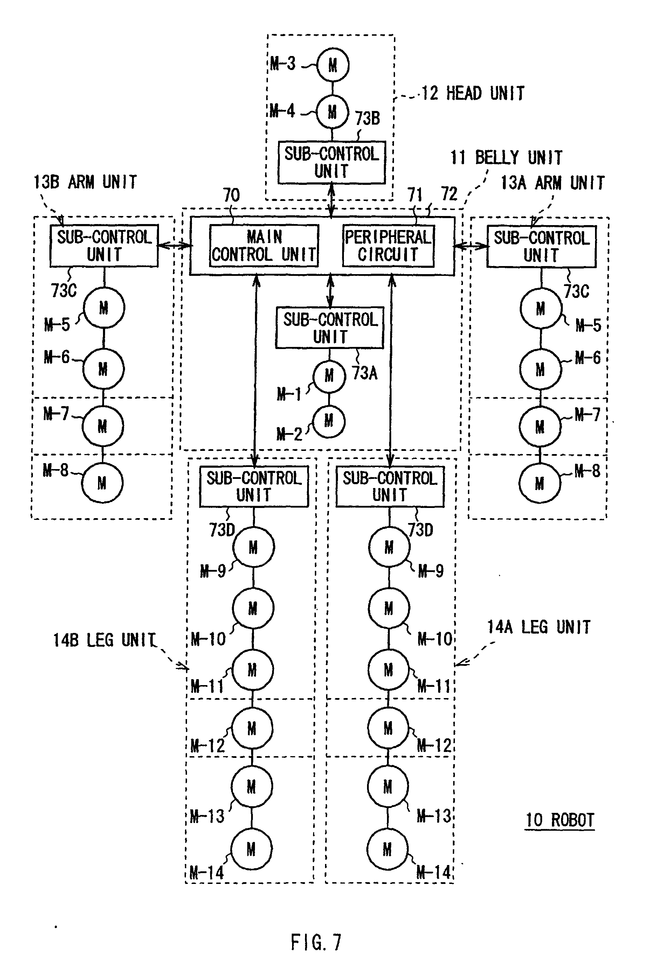

On the other hand, in the robot 10, a control unit 72 is provided as storing in a box a main control unit 70 for controlling the entire operation of the robot 10, a peripheral circuit 71 such as a power supply circuit, a communications circuit, etc., a battery not shown in the attached drawings, and so forth on the back of the hip base 21 forming the lower part of the belly unit 11 as shown in Fig. 7.

The control unit 72 is connected to each of sub-control units 73A through 73D provided in each configuration unit (the belly unit 11, the head unit 12, each of the arm units 13A and 13B, and each of the leg units 14A and 14B) so that a necessary power supply voltage can be provided for the sub-control units 73A through 73D and the control unit 72 can communicate with the sub-control units 73A through 73D.

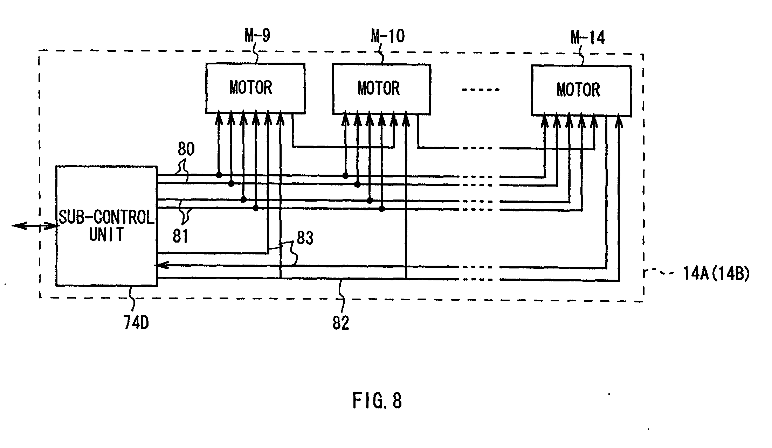

In addition, the sub-control units 73A through 73D are connected in parallel to the motors M-1 through M-14 in the corresponding configuration unit as shown in Fig. 8 through two drive voltage supply cables 80, two control voltage supply cables 81, and one simultaneous clock supply cable 82, and are connected to each control substrate stored in each of the motors M-1 through M-14 in the daisy-chain system through two serial communications cables 83. Further, Fig. 8 shows the connection between the sub-control unit 74D in each of the leg units 14A and 14B and each of the motors M-9 through M-14.

At this time, the main control unit 70 stores, as the rotation angle of the output axis of each of the motors M-1 through M-14, the form in each state of the robot 10 such as 'standing state,' 'sitting state,' etc., and the forms in time series at predetermined time intervals (for example, 0.5 second to be hereinafter referred to as a first time interval) when the robot 10 is changing its state, and when the robot 10 performs a predetermined operation such as a walking operation, etc.

When the main control unit 70 makes the robot 10 change its state, perform an operation, etc., it switches in time series for each of the first time interval the rotation angle of the output axis of the motors M-1 through M-14 in each of the stored forms in series, and then transmits the result to the corresponding sub-control units 74A through 74D.

On the other hand, each of the sub-control units 74A through 74D provides a power supply voltage for driving a motor and a control voltage for each of the corresponding motors M-1 through M-14 based on the power supply voltage supplied by the control unit 72 respectively through the drive voltage supply cable 80 and the control voltage supply cable 81.

Each of the sub-control units 74A through 74D computes the rotation angle, the rotation speed, or the rotation torque of each of the corresponding motors M-1 through M-14 at each timing (1 [ms] interval in this example) when the first time interval is equally divided into n (n is an integer equal to or larger than 2) from the rotation angle of each of the motors M-1 through M-14 assigned as described above at the first time interval from the main control unit 70, and controls each of the motors M-1 through M-14 based on the computation result.

As described above, in the robot 10, the drive of the motors M-1 through M-14 is controlled such that the form of the robot 10 being operated can sequentially match each of a time series of forms stored in the main control unit 70, and that various operations can be performed with predetermined movement or changed into various states.

(2) Configuration of Motors M-1 through M-14

(2-1) Entire configuration of motors M-1 through M-14

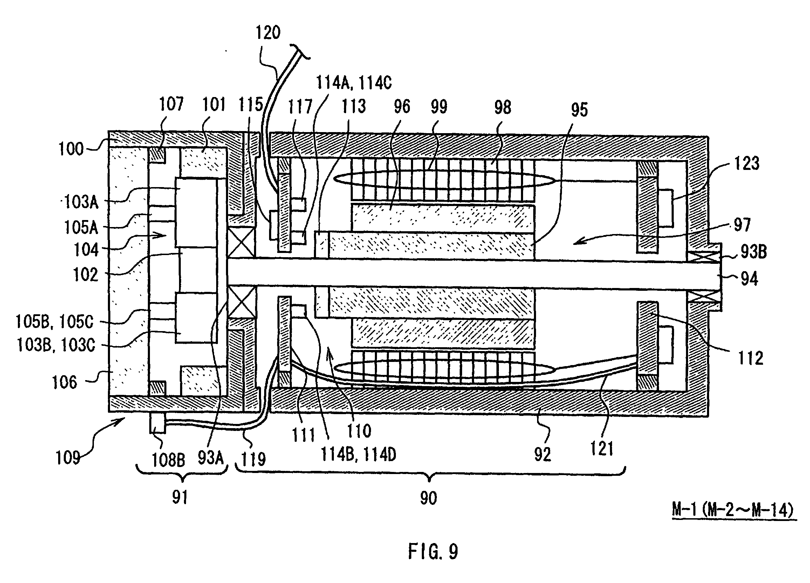

Described below is the configuration of each of the motors M-1 through M-14 used in the robot 10. Each of the motors M-1 through M-14 of the robot 10 comprises, as shown in Fig. 9, a motor unit 90 for generating the rotation torque, and a torque amplification unit 91 for amplifying the rotation torque generated by the motor unit 90 and outputting the amplified torque 91.

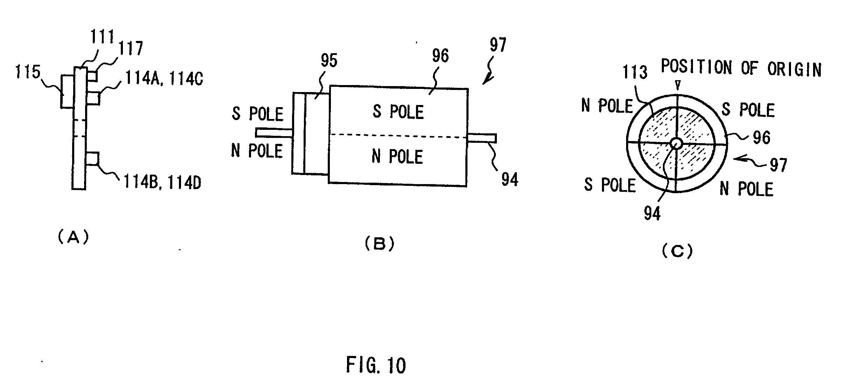

In this case, in the motor unit 90, a rotor axis 94 is provided and supported as freely rotating on rotation bearings 93A and 93B in a motor case 92. A rotor 97 is formed by designing the rotor axis 94 sharing the same axis with a rotor base unit 95, and a ring-shaped rotor magnet 96 magnetized to four poles as shown in Figs. 10(B) and 10(C).

In the motor case 92, as shown in Figs. 8 and 9A, six stator iron cores 98A through 98F are fixed at equal intervals (60 [°] intervals) as surrounding the rotor 97, and each of the stator iron cores 98A through 98F is wired to form coils 99A through 99F.

In the motor unit 90, two 180 [°] opposing coils 99A and 99D, 99B and 99E, and 99C and 99F (three sets in all) are respectively set as a U phase, a V phase, and a W phase. The rotor 97 can be rotation-driven by applying to each of the coils 99A through 99F in the U phase, the V phase, and the W phase a drive current with the phase 120 [°] shifted from each other, thereby generating the rotation torque.

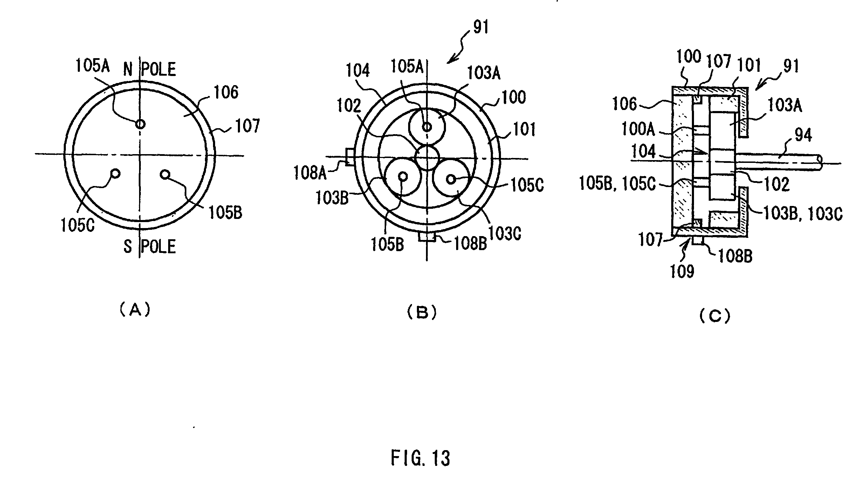

On the other hand, the torque amplifier 91 has a gear case 100 fixed at the end of the motor case 92 as freely removable as shown in Fig. 9 and Figs. 13A through 13C. The gear case 100 contains a circular internal gear 101, a sun gear 102 fixed at the end of the rotor axis 94, and a planet gear mechanism 104 comprising the first through the third planet gears 103A through 103C arranged at 120 [°] intervals between the internal gear 101 and the sun gear 102.

At this time, in the torque amplification unit 91, each of axes 105A through 105C of the first through the third planet gears 103A through 103C in the planet gear mechanism 104 is fixed to an output axis 106 arranged as freely rotating at the end of the gear case 100. With the configuration, the rotation torque provided from the motor unit 90 through the rotor axis 94 is transmitted to the output axis 106 through the planet gear mechanism 104, and then externally output through the output axis 106.

The torque amplification unit 91 also comprises a one-turn absolute angle sensor 109 comprising a circular resin magnet 107 fixed to the output axis 106, and the first and second hole elements 108A and 108B fixed to the surface of the gear case 100 such that they can face the surface of the resin magnet 107.

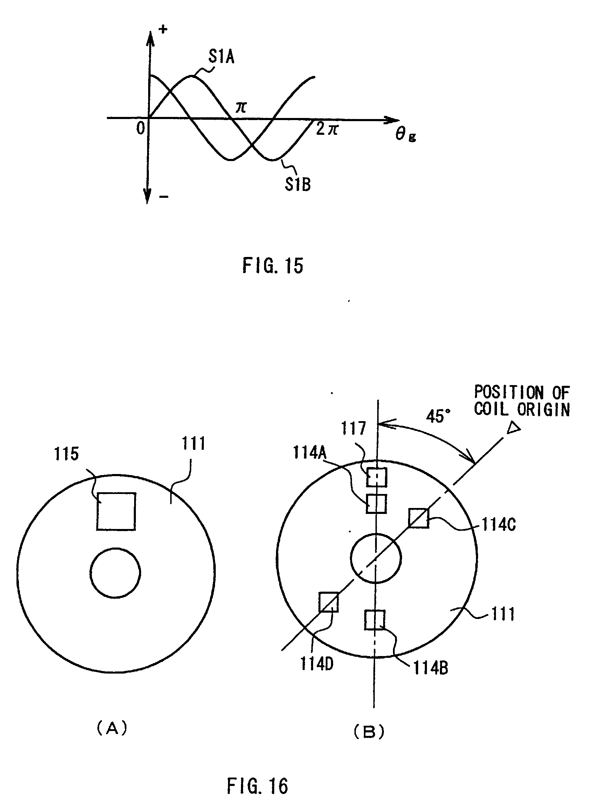

In this case, the resin magnet 107 is magnetized such that the magnetic flux density $\phi(\theta g)$ can be changed for two poles and a round as shown in Fig. 14, and is fixed to the output axis 106 as shown in Fig. 13(A). In addition, the first and second hole elements 108A and 108B are fixed to the surface of the gear case 100 with the phase difference of 90 [°] as shown in Fig. 13(B).

Thus, the one-turn absolute angle sensor 109 detects the rotation angle of the output axis 106 as a change of the magnetic flux density $\phi(\theta g)$ at the arrangement position of the first and second hole elements 108A and 108B associated with the rotation of the output axis 106, and the detection result can be output as first and second one-turn absolute angle sensor signal S1A and S1B of a waveform provided by $\sin(\theta g)$ and $\cos(\theta g)$ as shown in Fig. 15 from the first and second hole elements 108A and 108B.

In addition to the above described configuration, the motor case 92 of the motor unit 90 contains the rotor axis magnetic pole angle sensor 100 for detecting the magnetic pole angle of the rotor axis 94, a control substrate 111 for controlling the rotation angle, the rotation speed, and the rotation torque, etc. of the output axis 94 according to the control command from the corresponding sub-control units 74A through 74D, and a power substrate 112 for supplying a drive current for each of the coils 99A through 99F of the motor unit 90 under the control of the control substrate 111.

A rotor axis magnetic pole angle sensor 110 comprises a resin magnet 113 fixed to the front end of the rotor base unit 95 of the rotor 97, and the first through fourth hole elements 114A through 114D mounted onto the control substrate 111. The resin magnet 113 is magnetized for the four poles as the rotor magnet 96 of the rotor 97 as shown in Figs. 10(B) and 10(C), and is fixed to the rotor base unit 95 with the same phase as the rotor magnet 96.

The first through fourth hole elements 114A through 114D are mounted onto the control substrate 111 such that the first and second hole elements 114A and 114B face each other at 180 [°] on the concentric circle with the rotor axis 94, and the third and fourth hole elements 114C and 114D are positioned with the phase shifted by 45 [°] in the same direction as the first and the second hole elements 114A and 114B as shown in Fig. 16(B).

Thus, in the rotor axis rotation angle sensor 110, the magnetic pole angle of the rotor axis 94 can be detected as a change of the magnetic flux density with the arrangement of the first through fourth hole elements 114A through 114D associated with the rotation of the resin magnet 113 rotating with the rotor axis 94.

The magnetic pole angle of the rotor axis 94 refers to the angle obtained by multiplying the mechanical rotation angle of the rotor axis 94 by the half number of the magnetic poles of the rotor magnet 96. In this embodiment, since the rotor magnet 96 is magnetized for four poles, the magnetic angle ranges from 0 to $2\pi$.

On the other hand, the control substrate 111 is configured by loading a one-chip microcomputer 115 and a crystal oscillator 116 for generation of a CPU clock onto one side of a print wiring board, and by loading the first through fourth hole elements 114A through 114D of the above described rotor axis rotation angle sensor 110 and a temperature sensor 117 onto the other side as shown in Figs. 9, 10(A), 16, and 17.

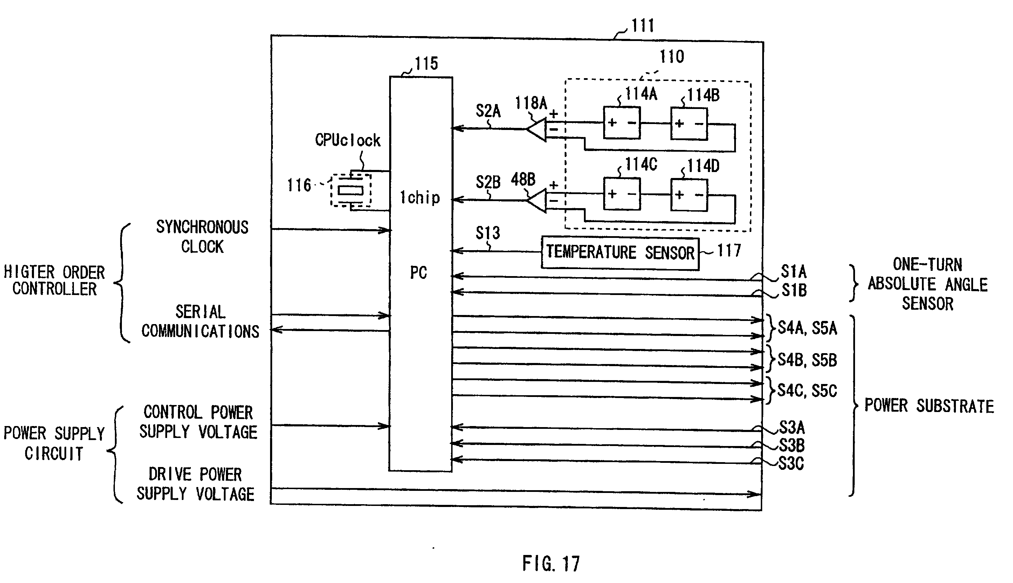

As shown in Fig. 17, the control substrate 111 adds up the outputs from the first and the second hole elements 114A and 114B and the outputs from the third and fourth hole elements 114C and 114D of the rotor axis magnetic pole angle sensor 110 through first and second subtraction circuits 118A and 118B, fetches them as first and second rotor axis magnetic pole angle sensor signals S2A and S2B into the one-chip microcomputer 115, and fetches first and second 1-turn absolute angle sensor signals S1A and S1B provided from the one-turn absolute angle sensor 109 (Figs. 9 and 13(C)) through a cable 119 (Fig. 9) into the one-chip microcomputer 115.

The control substrate 111 is connected to the corresponding sub-control units 74A through 74D (Fig. 8) through two control power supply lines and two drive power supply lines contained in a second cable 120. Thus, the one-chip microcomputer 115 can fetch each type of power supply voltage through the second cable 120, and communicate with the corresponding sub-control units 74A through 74D.

The one-chip microcomputer 115 computes the value (hereinafter referred to as first through third electric current command values) of the drive current to be applied to each of the coils 99A through 99F in the U, V, and W phases according to the specified values (hereinafter referred to a specified rotation angle, a specified rotation speed, and a specified rotation torque) of the rotation angle, the rotation speed, and the rotation torque of the output axis 106 (Fig. 9) provided from the sub-control units 74A through 74D through the second cable 120 for 1 [ms]; the first and second 1-turn absolute angle sensor signals S1A and S1B; the first and second rotor axis magnetic pole angle sensor signals S2A and S2B; and first through third drive current detection signals S3A through S3C provided from the power substrate 112 as described later, and then outputs the computed first through third electric current command values to the power substrate 112 through a third cable 121.

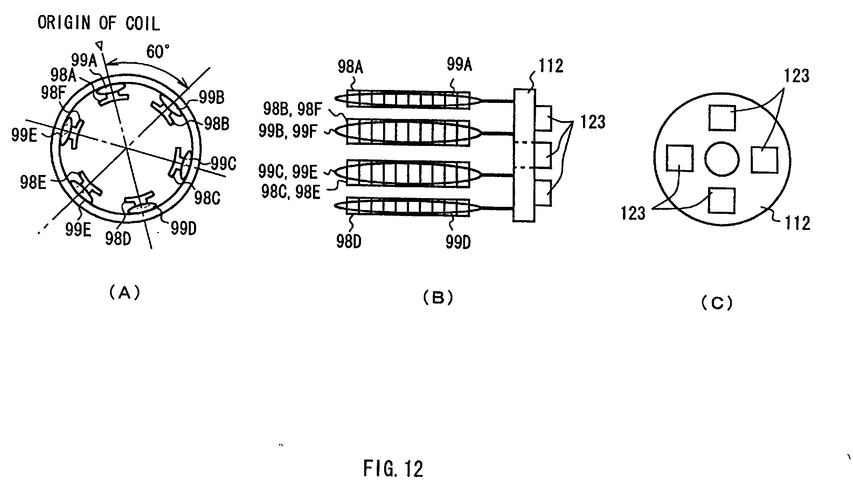

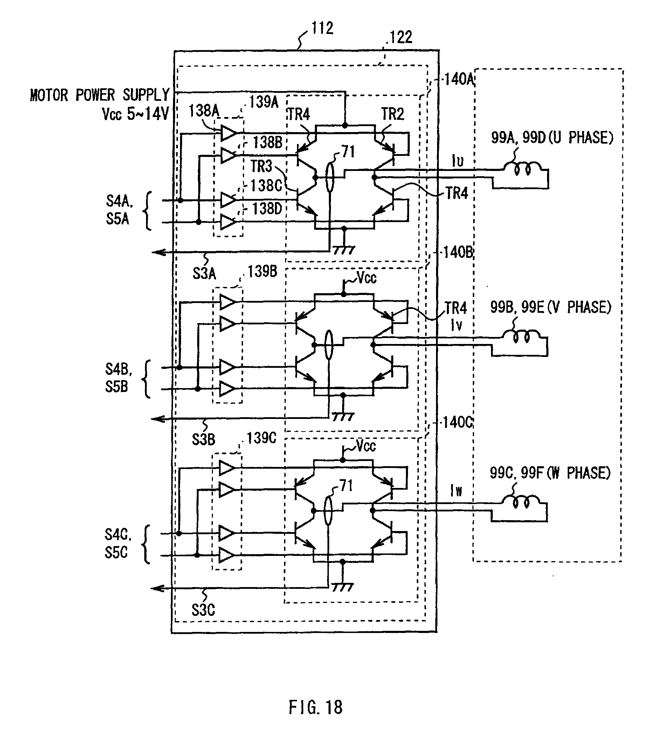

The power substrate 112 is configured by mounting a plurality of power transistor chips 123 forming a coil drive block 122 shown in Fig. 18 on one side of the circular printed substrate as shown in Figs. 9, 12(B), and 12(C).

The coil drive block 122 rotation-drives the rotor 97 of the motor unit 90 by applying the drive current, whose level depends on the corresponding the first through third electric current command values, to each of the coils 99A through 99F in the U, V, and W phases of the motor unit 90 based on the first through third electric current command values provided from the one-chip microcomputer 115 of the control substrate 111.

At this time, the coil drive block 122 detects the level of the drive current applied to each of the coils 99A through 99F in the U, V, and W phases, and transmits the detection results to the control substrate 111 through the third cable 121 (Fig. 9) as the first through third drive current detection signals S3A through S3C.

Thus, the motors M-1 through M-14 are designed to drive the motor unit 90 based on the specified rotation angle, the specified rotation speed, or the specified rotation torque provided from the sub-control units 74A through 74D through the control circuit comprising the one-chip microcomputer 115 of the control substrate 111 and the coil drive block 122 of the power substrate 112.

(2-2) Configurations of the one-chip microcomputer 115 and the coil drive block 122

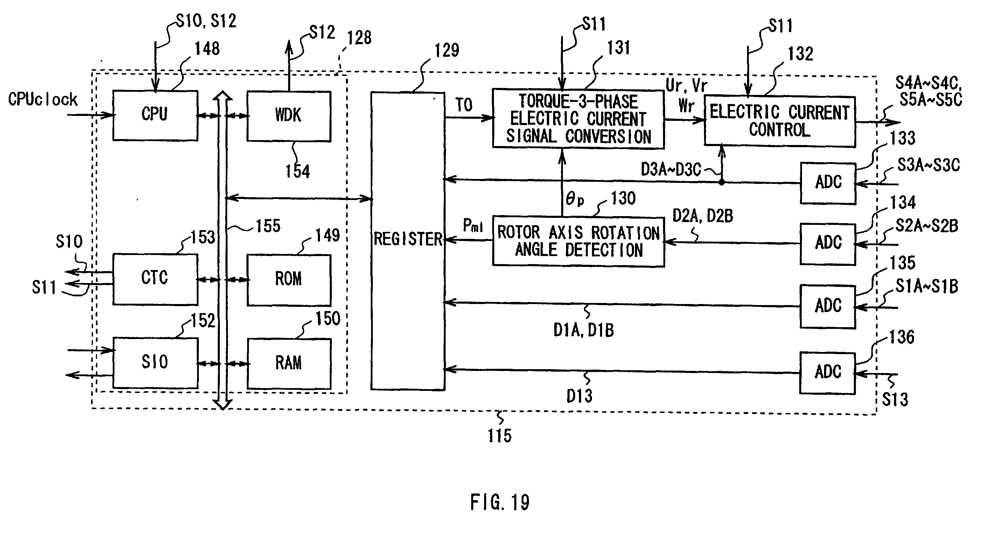

The one-chip microcomputer 115 comprises, as shown in Fig. 19, an arithmetic operations block 128, a register 129, a rotor axis rotation angle detecting block 130, a torque-3-phase electric current signal converting block 131, an electric current controlling block 132, and first through fourth analog/digital conversion circuits 133 through 136.

The one-chip microcomputer 45 digital-converts in the first analog/digital conversion circuit 133 the first through third drive current detection signals S3A through S3C provided from the power substrate 112, and provides obtained first through third drive current detection data D3A and D3B for the electric current controlling block 132, and stores the first through third drive current detection data D3A and D3B in the register 129.

In addition, the one-chip microcomputer 115 digital-converts in a third analog/digital conversion circuit 135 the first and second 1-turn absolute angle sensor signals S1A and S1B provided from the one-turn absolute angle sensor 109 (Figs. 9 and 13(C)), and stores the obtained first and second 1-turn absolute angle sensor data D1A and D1B in the register 129.

Furthermore, the one-chip microcomputer 115 digital-converts in a second analog/digital conversion circuit 134 the first and second rotor axis magnetic pole angle sensor signals S2A and S2B based on the output from the rotor axis magnetic pole angle sensor 110 provided from the first and second subtraction circuits 118A and 118B (Fig. 17), and inputs the obtained first and second rotor axis magnetic pole angle sensor data D2A and D2B to the rotor axis rotation angle detecting block 130.

The rotor axis rotation angle detecting block 130 detects a magnetic pole rotation angle (hereinafter referred to as a rotor axis magnetic pole rotation angle) $P_{ml}$ of a rotor axis 24, and a magnetic pole angle $\theta_p$ according to the

provided first and second rotor axis magnetic pole angle sensor data D2A and D2B, stores the rotor axis rotation angle $P_{ml}$ in the register 129, and transmits the magnetic pole angle $\theta_p$ to the torque-3-phase electric current signal converting block 131.

The magnetic pole rotation angle of the rotor axis 94 (rotor axis magnetic pole rotation angle $P_{ml}$) refers to the angle at which a change in the magnetic poles in a pair of the adjacent N and S poles of the resin magnet 113 detected by the first through fourth hole elements 114A through 114D with the rotation of the rotor axis 94 can be defined as one cycle (0 through $2\pi$). Since the resin magnet 113 is magnetized for four poles in the present embodiment, the rotor axis magnetic pole rotation angle $P_{ml}$ ranges from 0 to $4\pi$.

The arithmetic operations block 128 obtains a target rotation torque $T_0$ according to the first and second 1-turn absolute angle sensor data D1A and D1B and the rotor axis magnetic pole rotation angle $P_{ml}$ stored in the register 129, and the specified rotation angle, the specified rotation speed, or the specified rotation torque provided from the sub-control unit, and stores the operations result in the register 129. The target rotation torque $T_0$ is computed for 1 [ms] provided the specified rotation angle, the specified rotation speed, or the specified rotation torque from the sub-control unit.

The target torque $T_0$ is read from the register 129 one after another by the torque-3-phase electric current signal converting block 131. The torque-3-phase electric current signal converting block 131 computes the above described first through third electric current command values Ur, Vr, and Wr indicating the values of drive currents to be applied to each of the coils 99A through 99F in the U, V, and W phases in the motor unit 90 based on the target torque $T_0$, and the magnetic pole angle $\theta_p$ of the rotor axis 94 provided from the rotor axis rotation angle detecting block 130, and transmits the computation results to the electric current controlling block 132.

The electric current controlling block 132 performs a predetermined signal process containing a compensating process for a voltage change on the first through third electric current command values Ur, Vr, and Wr based on the first through third electric current command values Ur, Vr, and Wr provided from the torque-3-phase electric current signal converting block 131, and the first through third drive current detection data D3A through D3C provided from the first analog/digital conversion circuit 133. Then, the electric current controlling block 132 PWM (Pulse Width Modulation) modulates the result, and transmits the obtained first through third PWM signals S4A through S4C to the coil drive block 121 of the power substrate 112 through the third cable 121.

The third cable 121 is provided with two lines for each of the first through third PWM signals S4A through S4C. When the output axis 106 (Fig. 9) is driven for normal rotation, the electric current controlling block 132 transmits the first through third PWM signals S4A through S4C to the coil drive block 122 of the power substrate 112 through a first line, and transmits logic '0' level signals (hereinafter referred to as first through third reference signals) S5A through S5C in the first through third PWM signals S4A through S4C to the coil drive block 122 of the power substrate 112 through a second line.

When the output axis 106 is driven for inverse rotation, the electric current controlling block 132 transmits the first through third PWM signals S4A through S4C to the coil drive block 122 of the power substrate 112 through the second line, and transmits the first through third reference signals S5A through S5C to the coil drive block 122 of the power substrate 112 through the first line.

On the other hand, as shown in Fig. 18, the coil drive block 122 contains, corresponding to the coils 99A through 99F in the U, V, and W phases, first through third gate drive circuits 139A through 139C having the same configurations each containing four amplifiers 138A through 138C, and first through third inverter circuits 140A through 140C having the same configurations each comprising two PNP-type transistors TR1 and TR2 and two NPN-type transistors TR3 and TR4.

In the coil drive block 122, the first line of each of the U, V, and W phases is connected to the bases of the second PNP-type transistor TR2 and the first NPN-type transistor TR3 of the first through third inverter circuits 140A through 140C through the first and third amplifiers 138A and 138C of the corresponding first through third gate drive circuits 139A through 139C. The second line of each of the U, V, and W phases is connected to the bases of the second PNP-type transistor TR2 and the first NPN-type transistor TR4 of the first through third inverter circuits 140A through 140C through the second and fourth amplifiers 138B and 138D of the corresponding first through third gate drive circuits 140A through 140C.

In the coil drive block 122, each of the coils 99A through 99F in the U, V, and W phases in the motor unit 90 is connected between the central point of the connection between the collector of the first PNP-type transistor TR1 and the collector of the first NPN-type transistor TR3 in the first through third inverter circuits 140A through 140C, and the central point of the connection between the collector of the second PNP-type transistor TR2 and the second NPN-type transistor TR4.

In the coil drive block 122, the first through third PWM signals S4A through S4C provided through the first or the second line are converted into drive currents $I_u$, $I_v$, and $I_w$ in an analog waveform in the corresponding first through third inverter circuits 140A through 140C for each of the U, V, and W phases, and are applied to respective coils 99A through 99F in the corresponding U, V, and W phases.

In the coil drive block 122, the levels of the drive currents $I_u$, $I_v$, and $I_w$ provided for the coils 99A through 99F in the U, V, and W phases are detected by an electric current sensor 141 comprising the coils provided in the first through third inverter circuits 140A through 140C, and the detection result is transmitted to the first analog/digital conversion circuit 133 (Fig. 19) of the one-chip microcomputer 115 of the control substrate 111 as the above described first through third drive current detection signals S3A through S3C.

The detailed configuration of the arithmetic operations block 128 is described below by referring to Fig. 19.

The arithmetic operations block 128 comprises a CPU (Central Processing Unit) 148, a ROM (Read Only Memory) 149 storing various programs, a RAM (Random Access Memory) 150 as the work memory of the CPU 148, a serial communications input/output circuit 152 which is an input/output interface circuit to and from the corresponding sub-control units 73A through 73D, a servo-interruption signal generation circuit 153 for generating a servo-interruption signal S10 of a 1 [ms] cycle for servo-interruption and a PWM pulse signal S11 of a 50 [μm] cycle which is a PWM cycle, and a watch dog signal generation circuit 154 for generating a watch dog signal S12 having a predetermined cycle longer than 1 [ms] cycle for the CPU 148 detecting whether the servo-interruption signal S10 is correctly generated from the servo-interruption signal generation circuit 153. These components are interconnected through a CPU bus 155.

When a control voltage (5 [V]) is supplied by the corresponding sub-control units 73A through 73D, the CPU 148 first performs the initial processes for various initial values, parameter settings, etc. on the serial communications input/output circuit 152, the counter timer control circuit 153, the rotor axis rotation angle detecting block 130, the torque-3-phase electric current signal converting block 131, the electric current controlling block 132, etc. based on the initial program stored in the ROM 149.

Furthermore, based on the servo-interruption signal S10 provided from the counter timer control circuit 153 obtained as a result of the above described processes, and the corresponding program stored in the ROM 149, the CPU 148 executes a motor rotation control operations process for generating the above described target rotation torque $T_0$, a serial communications control process to and from the corresponding sub-control units 73A through 73D on a 1 [ms] cycle in a time-divisional manner.

(2-3) Software process

In the arithmetic operations block 128, the CPU 148 executes the motor rotation control operations process, the serial communications control process, etc. on 1[ms] cycle in a time-divisional manner based on the servo-interruption signal S10 provided from the counter timer control circuit 153, and the corresponding program stored in the ROM 149. Described below is the process of the CPU 148 in the process mode for the above described operations.

(2-3-1) Process of the CPU 148 in the motor rotation control operations process mode

The process of the CPU 148 in the motor rotation control operations mode is performed to compute the target rotation torque $T_0$ according to the designation of the value of the specified rotation position, the specified rotation speed, or the specified rotation torque assigned for 1[ms] by the above described corresponding sub-control units 73A through 73D.

The CPU 148 computes the target rotation torque $T_0$ by computing the rotation position $P_m$ of the output axis 94 (Fig. 9) based on the rotor axis magnetic pole rotation angle $P_{ml}$ stored in the register 129 by the rotor axis rotation angle detecting block 130 when the specified rotation position $P_{ref}$ is provided from the corresponding sub-control units 73A through 73D, by computing the target rotation speed $V_{mref}$ for the specified rotation position $P_{ref}$ and the current rotation speed Vm of the output axis by computing the rotations using the rotation position $P_m$ by the following Equations (1), and (2), and then by performing the following Equation (3) based on the above described Equations.

$$Vmref = (Pref - Pm) \times Kpp \tag{1}$$

$$Vm = Pm \times S \tag{2}$$

$$T0 = \left\{ [Vmref - Vm] \times \left[ 1 + \frac{Kvi}{S} \right] \right\} \times Kvp \tag{3}$$

When the specified rotation speed $V_{ref}$ is provided from the sub-control units 73A through 73D, the current rotation speed $V_m$ of the output axis 94 is computed by the Equation (2), and the target rotation torque $T_0$ is computed by performing the operation by the following Equation (4) based on the rotation speed $V_m$.

$$T0 = \left\{ [Vref - Vm] \times \left[ 1 + \frac{Kvi}{S} \right] \right\} \times Kvp \tag{4}$$

When the specified rotation torque $T_{ref}$ is provided from the sub-control units 73A through 73D, it is used as is as the target rotation torque $T_0$.

In these Equations (1) through (4), S indicates a Laplace operator, $K_{pp}$, $K_{vi}$, and $K_{vp}$ indicates control gain parameters set by the sub-control unit. By changing the values of the control gain parameters $K_{pp}$, $K_{vi}$, and $K_{vp}$, the answers of the motors M-1 through M-14 in response to the specified rotation angle $P_{ref}$ and the specified rotation speed $V_{ref}$ can be changed.

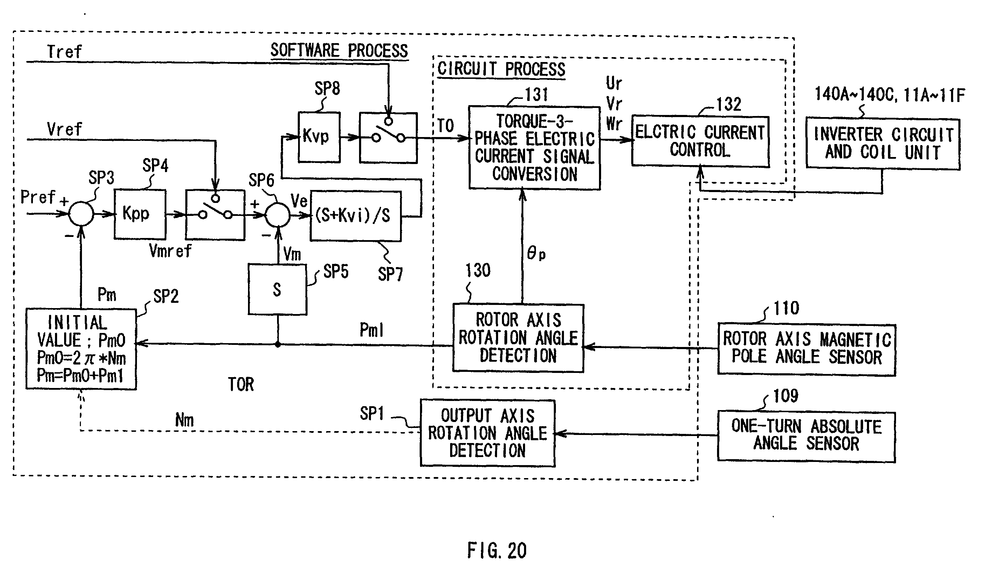

Fig. 20 shows the practical process procedure of the CPU 148 in the motor rotation control operations process mode.

The CPU 148 computes the number of magnetic pole rotations (hereinafter referred to as the number of rotor axis magnetic pole rotations) $N_m$ of the rotor axis 94 based on the first and second absolute angle sensor data D1A and D1B stored in the register 129 when the specified rotation angle $P_{ref}$ is provided from the sub-control units 73A through 73D (step SP1).

The number of rotor axis magnetic pole rotations $N_m$ is defined as the number or rotations each indicating a change of a magnetic flux at a pair of adjacent N and S poles of the resin magnet 113 detected by the first through fourth hole elements 114A through 114D of the rotor axis magnetic pole angle sensor 110 with the rotation of the rotor axis 94. According to the embodiment, since the resin magnet 113 is magnetized for four magnetic poles, the number of rotor axis magnetic pole rotations $N_m$ is 2 when the rotor axis 94 mechanically makes one turn.

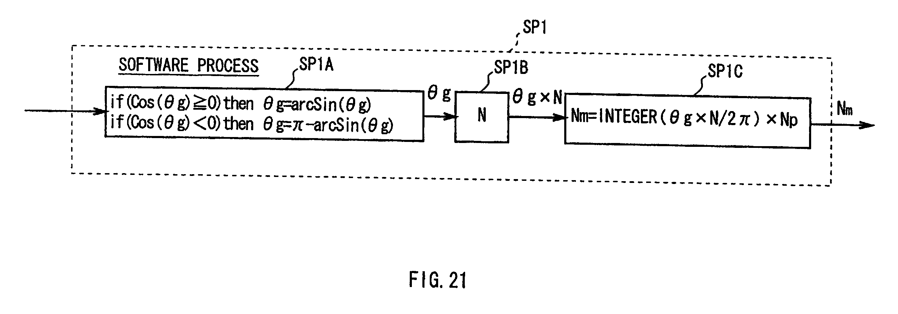

Then, the number of rotor axis magnetic pole rotations $N_m$ can be obtained as follows. First, the phase $\theta g$ of the first and second 1-turn absolute angle sensor signals S1A and S1B respectively represented by $\sin \theta g$ and $\cos \theta g$ is computed according to the rotor axis magnetic pole rotation number detecting procedure shown in Fig. 21 in the software process based on the first and second absolute angle sensor data D1A and D1B stored in the register 41 (step SP1A). The phase $\theta g$ is multiplied by the gear ratio N of a planet gear mechanism unit 16 of a torque amplification unit 3 (step SP1B). The multiplication result is divided by $2\pi$, and the integer portion of the division result is multiplied by a half value Np of the number of magnetic poles (4 according to the present embodiment) of the resin magnet 113 of the rotor axis magnetic pole angle sensor 110 (Fig. 9) (step SP1C).

In addition, the CPU 148 computes the rotation angle $P_m$ of the output axis 106 by performing the operation by the following Equation (6) using the $P_{m0}$ obtained by the following Equation (5) as an initial value based on the number of rotor axis magnetic pole rotations $N_m$ computed as described above and the rotor axis magnetic pole rotation angle data $P_{m1}$ stored in the register 129 as shown in Fig. 20 (step SP2).

$$Pm0 = 2\pi \times Nm \tag{5}$$

$$Pm = Pm0 \times Pm1 \tag{6}$$

Then, the CPU 148 detects the error $P_e$ (hereinafter referred to as a rotation angle error) for the specified rotation angle $P_{ref}$ (step SP3) by subtracting this rotation angle $P_m$ from the specified rotation angle $P_{ref}$.

Then, the CPU 148 computes the target rotation angle $V_{mref}$ for the specified rotation angle $P_{ref}$ by multiplying the rotation angle error $P_e$ by the proportion gain parameter $K_{pp}$ (step SP4).

The CPU 148 then computes the rotation speed $V_m$ of the output axis 106 by differentiating the rotor axis magnetic pole rotation angle $P_{m1}$ stored in the register 129 (step SP5), and computes the speed error Ve by subtracting the rotation speed $V_m$ computed in step SP5 from the target rotation speed $V_{mref}$ computed in step SP4 (step SP6).

Then, the CPU 148 sequentially multiplies the speed error Ve by the speed integration gain obtained by the following Equation (7) and the proportion gain $K_{vp}$ (step SP7 and step SP8).

$$\frac{S+Kvi}{S} \tag{7}$$

Thus, the target rotation torque $T_0$ can be obtained.

When the rotation speed $V_{ref}$ is provided from the sub-control units 73A through 73D in the motor rotation control operation process mode, the CPU 148 starts the process from the step SP6. When the specified rotation torque $T_{ref}$ is provided, it is stored in the register 129 as the target rotation torque $T_0$.

(2-3-2) Process of CPU 148 in the serial communications process mode

The CPU 148 communicates with the sub-control units 73A through 73D in the serial communication process mode, inputs a control command and a change parameter from the sub-control units 73A through 73D, or transmits the internal monitor signal to the sub-control units 73A through 73D.

(2-4) Relationship between coil drive current and output torque

Described below is the relationship between the drive currents $I_u$, $I_v$, and $I_w$ to be applied to each of the coils 99A through 99F in the U, V, and W phases of the motor unit 90 in the motors M-1 through M-14 with the above described configuration, and the rotation torque (hereinafter referred to as an output torque) to be externally output through the output axis 106.

When the density of the crossing magnetic fluxes of each of the coils 99A through 99F in the U, V, and W phases obtained when the drive currents $I_u$, $I_v$, and $I_w$ are applied to each of the coils 99A through 99F in the U, V, and W phases is defined as $\phi u$, $\phi v$, and $\phi w$, the output torque T ($\theta_p$) is obtained by the following Equation (8) using the magnetic pole angle $\theta_p$ of the rotor axis 94 of the motor unit 90.

$$T(\theta p) = Iu \times \phi u \times K0 + Iv \times \phi v \times K0 + Iw \times \phi w \times K0 \tag{8}$$

In the Equation (8) above, K0 indicates a constant coefficient obtained when the drive currents $I_u$, $I_v$, and $I_w$ are applied to each of the coils 99A through 99F.

The drive currents $I_u$, $I_v$, and $I_w$ to be applied to each of the coils 99A through 99F in the U, V, and W phases are controlled as shown by the following Equations (9), (10), and (11).

$$Iu = I0 \times \sin \theta p \tag{9}$$

$$Iv = I0 \times \sin\left[\theta p + \frac{2\pi}{3}\right] \tag{10}$$

$$Iw = I0 \times \sin\left[\theta p - \frac{2\pi}{3}\right] \tag{11}$$

Each of the magnetic flux density $\phi u$, $\phi v$, and $\phi w$ is computed as follows.

$$\phi u = \theta 0 \times \sin \theta p \tag{12}$$

$$\phi v = \phi 0 \times \sin\left[\theta P + \frac{2\pi}{3}\right] \tag{13}$$

$$\phi w = \phi 0 \times \sin\left[\theta p - \frac{2\pi}{3}\right] \tag{14}$$

Accordingly, the output torque T ($\theta p$) is obtained by substituting the Equations (9) through (14) in the Equation (8) as represented by the following Equation (15).

$$T(\theta p) = I0 \times \phi 0 \times K0\left\{\sin \theta p \times \sin \theta p + \sin\left[\theta p + \frac{2\pi}{3}\right] \times \sin\left[\theta P + \frac{2\pi}{3}\right] + \sin\left[\theta p - \frac{2\pi}{3}\right] \times \sin\left[\theta p - \frac{2\pi}{3}\right]\right\} \tag{15}$$

$$= I0 \times \phi 0 \times K1 \quad \text{(where, K1 = 1.5K0)}$$

Therefore, in the motors M-1 through M-14, an output torque proportional to the level of the drive currents $I_u$, $I_v$, and $I_w$ to be applied to each of the coils 99A through 99F can be obtained.

(3) Unleveled Ground Walking Control Process

In addition to the above described configuration, the subcontrol unit 73D of each of the leg units 14A and 14B of the robot 10 is designed to perform an unleveled ground walking control process for controlling each of the motors M-13 and M-14 of the ankle joint mechanism 43 such that the robot 10 can correctly walk while keeping balance even on the unleveled ground.

In this case, the unleveled ground walking control process can be performed by controlling the rotation of each of the motors M-13 and M-14 of the ankle joint mechanism 43 to allow the reverse surface of the foot unit 44 on the walkway to follow the tilt or the convexity/concavity surface of the walkway (control the tilt of the foot unit based on the tilt or the convexity/concavity of the walkway). The control can be performed by controlling the rotation of each of the motors M-13 and M-14 such that the external force applied to the output axis 106 (Fig. 9) of each of the motors M-13 and M-14 of the ankle joint mechanism 43 can be constantly '0.'

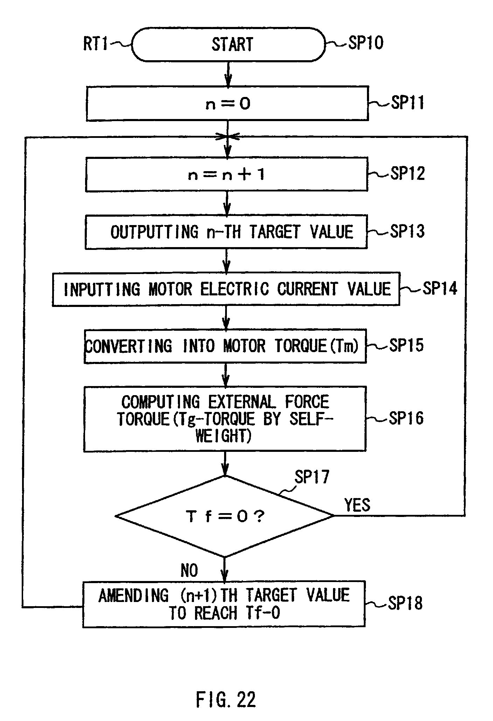

In the sub-control unit 73D of each of the leg units 14A and 14B, the above described unleveled ground walking control is performed on each of the motors M-13 and M-14 of the ankle joint mechanism 43 in the unleveled ground walking controlling procedure RT1 shown in Fig. 22 each time a target rotation angle of each of the motors M-9 through M14 is provided from the main control unit 70 (Fig. 7) at the first time intervals in the walking operation.

That is, when the main control unit 70 provides a target rotation angle of each of the motors M-13 and M-14 of the ankle joint mechanism 43 for the sub-control unit 73D of each of the leg units 14A and 14B, the sub-control unit 73D starts the unleveled ground walking controlling procedure RT1 in step SP10, and then, in step SP11, computes the specified rotation angle, the specified rotation speed, or the specified rotation torque of each of the motors M-13 and M-14 for 1 [ms] which is a control cycle of each of the motors M-13 and M-14 based on the target rotation angle of each of the motors M-13 and M-14 of the ankle joint mechanism 43 preliminarily provided by the main control unit 70, and the target rotation angle of each of the motors M-13 and M-14 newly provided by the main control unit 70.

Accordingly, when a target rotation angle of each of the motors M-13 and M-14 is provided from the main control unit 70 to the sub-control unit 73D every 0.5 second, the specified rotation angle, the specified rotation speed, or the specified rotation torque of each of the motors M-13 and M-14 for 1 [ms] is computed 50 times in time series.

In step SP11, the sub-control unit 73D resets to '0' the count value indicating the order (that is, the order of the specified rotation angle, the specified rotation speed, or the specified rotation torque in the 50 time series data) of the specified rotation angle, the specified rotation speed, or the specified rotation torque being counted in an internal counter.

Then, in step SP12, the sub-control unit 73D increases the count value of the internal counter by 1. Then, control is passed to step SP13, and the specified rotation angle, the specified rotation speed, or the specified rotation torque corresponding to the count value is transmitted to each of the motors M-13 and M-14 of the ankle joint mechanism 43.

At this time, the first through third drive current detection data D3A through D3C (Fig. 19) obtained by digital-converting the first through third drive current detection signals S3A through S3C (Fig. 18) output from the electric current sensor 71 (Fig. 18) of each of the coil drive blocks 140A through 140C (Fig. 18) of the power substrate 112 (Fig. 18) in the first analog/digital conversion circuit 133 of the one-chip microcomputer 115 (Fig. 19) is provided from the motors M-13 and M-14 to the sub-control unit 73D through the communications with each of the motors M-13 and M-14 of the ankle joint mechanism 43.

Thus, the sub-control unit 73D fetches the first through third drive current detection data D3A through D3C from each of the motors M-13 and M-14 in step SP14, then computes the output torque $T_m$ of each of the motors M-13 and M-14 of the ankle joint mechanism 43 based on the first through third drive current detection data D3A through D3C in step SP15.

Furthermore, instep SP16, the sub-control unit 73D computes the torque (hereinafter referred to as an external force torque $T_f$) generated on the output axis 106 of each of the motors M-13 and M-14 by an external force by subtracting the preliminarily stored torque $T_g$ generated by their weights when they are formed on the output axis 106 of each of the motors M-13 and M-14 from the output torque $T_m$.

In addition, in step SP17, the sub-control unit 73D determines for each of the motors M-13 and M-14 whether or not the computed value of the external force torque $T_f$ is '0.'

Obtaining an affirmative result in step SP17 indicates, for example, the foot unit 44 does not touch the ground or the reverse surface of the foot unit 44 touches the ground as following the tilt or the concavity/convexity of the walkway. At this time, the sub-control unit 74D returns to step SP12, and performs the processes in and after step SP2 for 1 [ms].

On the other hand, obtaining a negative result in step SP17 indicates that the reverse surface of the foot unit 44 touches the ground as not following the tilt or the concavity/convexity of the walkway. At this time, the sub-control unit 74D amends the next specified rotation angle, the specified rotation speed, or the specified rotation torque to be supplied for each of the motors M-13 and M-14 in step SP18 such that the value of the external force torque $T_f$ provided for the output axis 108 of the motors M-13 and M-14 can reach '0,' then returns to step SP12, and then performs the processes in and after step SP2 for 1 [ms].

Thus, the robot 10 can correctly walk while keeping good balance even on the unleveled ground by the sub-control unit 73D of each of the leg units 14A and 14B amending the specified rotation angle, the specified rotation speed, or the specified rotation torque to be supplied for the motors M-13 and M-14 of the ankle joint mechanism 43 as necessary.

(4) Operation and Effect of the Present Embodiment

With the above described configuration, when the robot 10 is walking, the rotation of the motors M-13 and M-14 is controlled such that the external force torque $T_f$ applied to the output axis 106 of each of the motors M-13 and M-14 of the ankle joint mechanism 43 of each of the leg units 14A and 14B can be constantly '0.'

Therefore, with this robot 10, the reverse surface of the foot unit 44 can follow even the unleveled ground having tilt and convexity/concavity, thereby realizing a walk with good balance. Thus, the robot 10 can omit various sensors for the conventional unleveled ground walking control.

In addition, since the robot 10 contains the control substrate 111 and the power substrate 112 for drive-controlling the motor unit 90 in each of the motors M-1 through M-14, all motors M-1 through M-14 can be connected to each of the sub-control units 73A through 73D through a total of 7 cables as shown in Fig. 8, thereby reducing the number of wires connected to the entire robot.

Furthermore, since the robot 10 has the configuration shown in Fig. 9 in which the motor unit 90 and the torque amplification unit 91 are stored as compactly incorporated as each of the motors M-1 through M-14, the configuration of each joint mechanism (the waist joint mechanism 22, the neck joint mechanism 26, the shoulder joint mechanism 29, the elbow joint mechanism 32, the thigh joint mechanism 36, the knee joint mechanism 41, and the ankle joint mechanism 43) can be simpler than the configuration in which the motor unit 90 and the torque amplification unit 91 are mounted independent of each other, thereby realizing a small joint mechanism (and the robot 10).

With the above described configuration, the two-leg walking robot 10 can follow even the unleveled ground having tilt and convexity/concavity by controlling the rotation of the motors M-13 and M-14 such that the external force torque $T_g$ applied to the output axis 106 of each of the motors M-13 and M-14 of the ankle joint mechanism 43 of each of the leg units 14A and 14B can be constantly '0' in the walking operation, thereby realizing a walk with good balance. Thus, various sensors used in the conventional unleveled ground walking control can be omitted, thereby realizing a robot having a simple configuration.

In addition, since the robot 10 contains the control substrate 111 and the power substrate 112 for drive-controlling the motor unit 90 in the motors M-1 through M-14, thereby reducing the number of wires in the entire robot and realizing a robot having a simpler configuration.

(5) Other Embodiments

According to the above described embodiments, the present invention is applied to a two-leg walking robot 10. However, the present invention is not limited to this application, but can be widely applied to various robots. In this case, the invention relating to the control of a joint mechanism can be widely applied. to a four-leg walking robot and other robots with the number of legs other than two or four. In addition, the invention including a motor control unit as a drive unit for each of the joint mechanism in a motor unit can also be widely applied to various robots other than walking robots.

In the above described embodiments, the invention relating to the control of a joint mechanism is applied to the ankle joint mechanism 43 connecting the lower leg unit as the first link (first component) of the leg units 14A and 14B to the foot unit 44 as the second link (second component). However, the present invention is not limited to this application, but can be widely applied to various units other than the ankle joint mechanism 43, for example, to a wrist joint, etc.

Furthermore, in the above described embodiments, the electric current sensor 71 is made of the coil mounted as shown in Fig. 18 as an electric current detection unit for detecting the drive currents $I_u$, $I_v$, and $I_w$ (shown in Fig. 18) of the motors M-1 through M-14. However, the present invention is not limited to this application, but can be widely applied to various configurations depending on the configuration of the applicable actuator.

In addition, according to the above described embodiments, the function of an external torque detection unit for detecting the external torque (external force torque $T_f$) applied to the output axis 106 of the motors M-13 and M-14 based on the drive currents $I_u$, $I_v$, and $I_w$ (Fig. 18) of the motors M-13 and M-14 detected by the electric current sensor 71 (Fig. 18) is assigned to the sub-control unit 73D of each of the leg units 14A and 14B. However, the present invention is not limited to this application, but the function can be assigned to the arithmetic operations block 128 (Fig. 19) in the motors M-13 and M-14.

Furthermore, according to the above described embodiment, the control substrate 111 and the power substrate 122 are configured as shown in Figs. 17 through 21 as motor control units for drive-controlling the motor unit 90 of each of the motors M-1 through M-14 configured as shown in Fig. 9. However, the present invention is not limited to this application, but various configurations can be widely applied.

Industrial Applicability

The present invention can be applied to a two-leg walking robot or other walking robots.

Explanation of Reference Numerals

10...robot, 11...belly unit, 12...head unit, 13A, 13B...arm units, 14A, 14B...leg units, 43...ankle joint mechanism, 44...foot unit, 70...main control unit, 73A through 73D...sub-control units, 106...output axis, 111...control substrate, 112...power substrate, 148...CPU, M-1 through M-14...motors, and RT1...unleveled ground walking controlling procedure.

**Claims**

1. A joint mechanism control apparatus having an actuator for generating a rotation torque whose level depends on a drive current, connecting a first link to a second link as freely rotating on an predetermined axis, and rotating the first link on the predetermined axis based on the rotation torque output from the actuator through an output axis of the actuator, characterized by comprising:

   electric current detection means for detecting an electric current value of the drive current of the actuator; and
   external force torque detection means for detecting a level of a torque by an external force applied to the output axis of the actuator based on the electric current value detected by said electric current detection means.

2. The joint mechanism control apparatus according to Claim 1, characterized by further comprising:

   control means for controlling the actuator based on a detection result from said external force torque detection unit such that the external force applied to the output axis of the actuator can be removed.

3. The joint mechanism control apparatus according to Claim 1, characterized in that:

   said actuator comprises:

       a motor unit generating the rotation torque depending on a supplied drive current;
       a torque amplification unit amplifying the rotation torque generated by said motor unit, and transmits the torque to said output axis; and
       motor control means for controlling said motor unit by supplying said motor unit with the drive current at a level according to externally provided control information, and

   said motor control unit is provided in said motor unit.

4. A joint mechanism control method having an actuator for generating a rotation torque whose level depends on a drive current, connecting a first link to a second link as freely rotating on an predetermined axis, and rotating the first link on the predetermined axis based on the rotation torque output from the actuator through an output axis of the actuator, characterized by comprising:

   a first step of detecting an electric current value of the drive current of the actuator; and
   a second step of detecting a level of torque by an external force applied to the output axis of the actuator based on the detected electric current value.

5. The joint mechanism control method according to Claim 4, characterized by further comprising:

   a third step of controlling the actuator such that the torque by the external force applied to the output axis of the actuator can be removed based on a detected result obtained in said second step.

6. A robot device including a joint mechanism having an actuator for generating a rotation torque whose level depends on a drive current, connecting a first component to a second component as freely rotating on a predetermined axis, and rotating the first component on the predetermined axis based on the rotation torque output from the actuator through an output axis of the actuator, characterized by comprising:

electric current detection means for detecting an electric current value of the drive current of the actuator; and

external force torque detection means for detecting a level of a torque by an external force applied to the output axis of the actuator based on the electric current value detected by said electric current detection means.

7. The robot device according to Claim 6, characterized by further comprising:

control means for controlling said actuator such that the torque by the external force applied to the output axis of the actuator can be removed based on a detected result obtained in said external force torque detection means.

8. The robot device according to Claim 6, characterized in that :

said actuator comprises:

a motor unit generating the rotation torque depending on a supplied drive current;
a torque amplification unit amplifying the rotation torque generated by said motor unit, and transmits the torque to said output axis; and
motor control means for controlling said motor unit by supplying said motor unit with the drive current at a level according to externally provided control information, and

said motor control means is provided in said motor unit.

9. A robot device control method having a joint mechanism including an actuator for generating a rotation torque whose level depends on a drive current, connecting a first component to a second component as freely rotating on an predetermined axis, and rotating the first component on the predetermined axis based on the rotation torque output from the actuator through an output axis of the actuator, comprising:

a first step of detecting an electric current value of the drive current of the actuator; and
a second step of detecting a level of a torque by an external force applied to the output axis of the actuator based on the detected electric current value.

10. The robot device control method according to Claim 10, characterized in that:

a third step of controlling the actuator such that the torque by the external force applied to the output axis of the actuator can be removed based on a detected result obtained in said second step.

11. A robot device having a pair of leg units in each of which a lower leg unit is connected to a thigh unit through a knee joint mechanism, and a foot unit is connected to the lower leg unit through an ankle joint mechanism, said foot units of said leg units are alternately touch a walking path such that a walking operation can be performed with the leg units are driven in a predetermined pattern, characterized by comprising:

an actuator, provided in said ankle joint mechanism, generating a rotation torque whose level depends on a drive current for rotation-driving said foot unit on a predetermined axis;
electric current detection means for detecting an electric current value of the drive current of the actuator; and
external force torque detection means for detecting a level of a torque by an external force applied to the output axis of the actuator based on the electric current value detected by said electric current detection means; and
control means for controlling the actuator based on a detection result from said external force torque detection unit such that the external force applied to the output axis of the actuator can be removed.

12. The robot device according to Claim 11, characterized in that:

said actuator comprises:

a motor unit generating the rotation torque depending on a supplied drive current;
a torque amplification unit amplifying the rotation torque generated by said motor unit, and transmits the torque to said output axis; and
motor control means for controlling said motor unit by supplying said motor unit with the drive current at a level according to externally provided control information, and

said motor control means is provided in said motor unit.

**13.** A method of controlling a robot device having a pair of leg units in each of which a lower leg unit is connected to a thigh unit through a knee joint mechanism, and a foot unit is connected to the lower leg unit through an ankle joint mechanism, said foot units of said leg units are alternately touch a walking path such that a walking operation can be performed with the leg units are driven in a predetermined pattern, characterized by comprising:

a first step of detecting an electric current value of the drive current provided for an actuator, provided in said ankle joint mechanism, generating a rotation torque whose level depends on a drive current for rotation-driving said foot unit on a predetermined axis;
a second step of detecting a level of a torque by an external force applied to the output axis of the actuator based on the detected electric current value; and
a third step of controlling the actuator, based on a detection result obtained in said second step, such that the external force applied to the output axis of the actuator can be removed.

**14.** A joint device in which a first link is connected to a second link as freely rotating on a predetermined axis, comprising

an actuator generating rotation torque for rotation-driving said first link on said predetermined axis, characterized in that
said actuator comprises:

a motor unit generating the rotation torque; and
motor control means for controlling the drive of said motor unit; and
said motor control means is provided in said motor unit.

**15.** The joint device according to Claim 14, further comprising:

torque amplification means for amplifying the rotation torque output from said motor unit, characterized in that said motor unit and said torque amplification means are incorporated into one unit.

**16.** A robot device having a joint mechanism in which a first component is connected to a second component as freely rotating on a predetermined axis, comprising:

an actuator generating a rotation torque for rotation-drive said first component on the predetermined axis, wherein
said actuator comprises:
a motor unit generating the rotation torque; and

motor control means for controlling the drive of said motor unit characterized in that

said motor control means is provided in said motor unit.

**17.** The robot device according to Claim 16, further comprising

a torque amplification means for amplifying the rotation torque output from said motor unit, characterized in that
said motor unit and said torque amplification means are incorporated into one unit.

**16**

FIG. 1

FIG. 2

**12 HEAD UNIT**

29

26 { 28
27

30  31

34

13B ARM UNIT

13A ARM UNIT

35(32)

33

23
24 } 22

11 BELLY UNIT

37
36 { 38
39

14A LEG UNIT

45(41)

14B
LEG UNIT

43 { 46
45

44

10 ROBOT

**FIG. 3**

FIG. 4

36 THIGH JOINT MECHANISM

(A)

(B)

FIG. 5

43 ANKLE JOINT MECHANISM

M-13

42

64

M-14

60

61

44

(A)

42

M-13

63

64

61

M-14

62

60

44

(B)

43

42

M-13

63

61

64

M-14

62

60

44

(C)

FIG. 6

EP 1 070 571 A1

FIG. 7

FIG. 8

FIG. 9

115 ╮
111
117
114A, 114C
114B, 114D

(A)

95
96
97

S POLE

N POLE

S POLE

N POLE

94

(B)

113    POSITION OF ORIGIN

N POLE        S POLE

96

97

S POLE        N POLE

94

(C)

FIG. 10

99A (U PHASE)    99
98A
94
99B (V PHASE)
98F
98B
99F (W PHASE)
92
97
99C (W PHASE)
98E
98C
96
99E (V PHASE)
98D
98
99D (U PHASE)

FIG. 11

$\phi(\theta_g)$    Sin($\theta_g$)

S POLE AREA

0    $\pi$    $2\pi$    $\theta_g$

N POLE AREA

FIG. 14

ORIGIN OF COIL

(A)

(B)

(C)

FIG. 12

FIG. 13

FIG. 15

FIG. 16

(A)

(B)

FIG. 17

FIG. 18

FIG. 19

FIG. 20

EP 1 070 571 A1

SP1

SOFTWARE PROCESS    SP1A

if (Cos($\theta$g)≧0) then  $\theta$g=arcSin($\theta$g)
if (Cos($\theta$g)<0) then  $\theta$g=$\pi$−arcSin($\theta$g)

$\theta$g

SP1B

N

$\theta$g×N

SP1C

Nm=INTEGER($\theta$g×N/2$\pi$)×Np

Nm

FIG. 21

RT1 — ( START ) — SP10

↓

| n = 0 | — SP11

↓

| n = n + 1 | — SP12

↓

| OUTPUTTING n-TH TARGET VALUE | — SP13

↓

| INPUTTING MOTOR ELECTRIC CURRENT VALUE | — SP14

↓

| CONVERTING INTO MOTOR TORQUE (Tm) | — SP15

↓

| COMPUTING EXTERNAL FORCE TORQUE (Tg-TORQUE BY SELF-WEIGHT) | — SP16

↓

SP17

< T f = 0 ? >  —— YES ——→

NO ↓

| AMENDING (n+1)TH TARGET VALUE TO REACH Tf-0 | — SP18

**FIG. 22**

FIG. 23

EP 1 070 571 A1

# INTERNATIONAL SEARCH REPORT

International application No.

PCT/JP00/00754

**A. CLASSIFICATION OF SUBJECT MATTER**
Int.Cl$^7$ B25J 5/00 9/12

According to International Patent Classification (IPC) or to both national classification and IPC

**B. FIELDS SEARCHED**

Minimum documentation searched (classification system followed by classification symbols)
Int.Cl$^7$ B25J 5/00 9/12

Documentation searched other than minimum documentation to the extent that such documents are included in the fields searched
Jitsuyo Shinan Koho 1920-1996 Toroku Jitsuyo Shinan Koho 1994-2000
Kokai Jitsuyo Shinan Koho 1971-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 10-52089, A (SUZUKI MOTOR CORPORATION), 20 February, 1998 (20.02.98), P.1, left column (Family: none) | 1-17 |
| Y | JP, 2-59291, A (Matsushita Electric Ind. Co., Ltd.), 28 February, 1990 (28.02.90), P.2, upper left column, lines 3-7 (Family: none) | 1-17 |
| Y | JP, 4-53691, A (Matsushita Electric Ind. Co., Ltd.), 21 February, 1992 (21.02.92), P.1, right column, lines 12-19 (Family: none) | 1-17 |
| Y | JP, 3-161290, A (Honda Motor Co., Ltd.), 11 July, 1991 (11.07.91), P.1, left column, lines 5-13 | 2,5,7,10,11,13 |

☐ Further documents are listed in the continuation of Box C. ☐ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier document but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 09 May, 2000 (09.05.00) | 23 May, 2000 (23.05.00) |

| Name and mailing address of the ISA/ | Authorized officer |
|---|---|
| Japanese Patent Office | |
| Facsimile No. | Telephone No. |

Form PCT/ISA/210 (second sheet) (July 1992)